# EUROPEAN PATENT SPECIFICATION

(11) **EP 2 039 501 B1**
(45) Date of publication and mention of the grant of the patent: **09.03.2011**
(21) Application number: 08252738.3
(22) Date of filing: 19.08.2008
(51) Int. Cl.: B29D 30/06, B29C 43/36, C08L 21/00, C08L 83/04

(54) **Bladder for tire production**
Blase für Reifenherstellung
Vessie pour la production de pneus

(30) Priority: 21.09.2007 JP 2007245599
(43) Date of publication of application: 25.03.2009
(73) Proprietor: Bridgestone Corporation, Tokyo 104-8340 (JP); Shin-Etsu Chemical Co., Ltd., Tokyo 100-0004 (JP)
(72) Inventor: Yano, Masashi, Kodaira-shi Tokyo 187-8531 (JP); Nohara, Yoshio, Kodaira-shi Tokyo 187-8531 (JP); Igarashi, Minoru, Gunma 379-0224 (JP); Yoshida, Masayuki, Gunma 379-0224 (JP)
(74) Representative: Whalley, Kevin

(56) References cited:
- EP-A- 0 385 919
- WO-A-2006/106236
- GB-A- 2 087 914
- US-A- 4 201 698
- US-A- 4 710 541
- US-A- 4 889 677
- US-A- 5 208 097

## Description

This invention relates to a bladder for tire production using a silicone rubber composition (hereinafter referred to as a composition simply), and more particularly to a bladder for tire production which is used for enlarging the tire during tire vulcanization and building.

At the tire production step are generally used bladders which are roughly divided into two types, i.e. a bladder for tire building used when various constructional members for the tire are assembled to build a green tire (uncured tire) and a bladder for tire vulcanization used for giving a final form for a product tire during the vulcanization.

As the bladder for tire building, there have hitherto been used ones made from natural rubber formulations and through applications of an adhesion solvent and a curable silicone oil onto a surface of a vulcanized cylindrical member. On the other hand, butyl rubber formulations have hitherto been used in the bladder for tire vulcanization for ensuring heat resistance and elongation, but it is necessary to apply a releasing agent onto both of an outer surface of the bladder and an inner surface of a green tire (innerliner) in order to prevent the adhesion between the bladder and the green tire prior to the vulcanization (see, for example, JP-A-H06-339927, [0002] and so on).

As a technique for improving the bladder for tire production, JP-A-2005-246630 discloses a bladder for tire production formed by making a barrel portion contacted with an inner face of the tire from rubber containing short fibers and varying a compounding ratio of short fibers in accordance with site of the barrel portion.

In the conventional bladder for tire building, however, since the strength of the cured silicone is small, cracks are easily produced on the surface and hence there is a problem that the repetitive service life is short, and also the tear strength is as low as not more than 20 kN/m. On the other hand, in the bladder for tire vulcanization, the use of the releasing agent is essential, so that the number of steps increases and also the tire quality may be badly affected in the vulcanization. As a result, it is demanded to realize a bladder capable being used without the releasing agent. Moreover, the repetitive use limit of the conventional bladder for tire vulcanization is about 450 times in the vulcanization of a general-purpose tire for passenger car depending on the application form of the releasing agent, so that it is demanded to develop a bladder having a longer service life.

Attention is also drawn to the disclosures of US-4889677 A and US-4201698 A.

It is, therefore, an object of the invention to solve the above problems by improving materials for the bladder and to provide a technique for realizing a bladder for tire production suitable in both of tire building and vulcanization without problems as generated in the conventional technique.

The inventors have made various studies and found that a bladder for tire production having no drawback or problem as in the conventional bladder is obtained by applying a specified silicone rubber composition as shown below to the bladder, and as a result the invention has been accomplished.

That is, the invention is a bladder for tire production comprising a silicone rubber composition comprising (A) 100 parts by mass of a straight-chain diorganopolysiloxane including two or more alkenyl groups bonded to silicon atoms in its molecule and having a weight average molecular weight of 300000 - 1200000; ; (B) 0.01-10 parts by mass of an organohydrogenpolysiloxane represented by the following mean compositional formula:

(R¹)ₓH_{y}SiO_{(4-x-y)/2}

wherein R¹ is a substituted or non-substituted monovalent hydrocarbon group other than an aliphatic unsaturated group, and each of x and y is positive number satisfying 1≤x≤2.2, 0.002≤y≤1 and 1.002≤x+y≤3 and including two or more hydrogen atoms bonded to silicon atoms in its molecule; (C) 20-80 parts by mass of a dry silica having a specific surface area of not less than 100 m²/g; and (D) 0.1-1000 ppm of a platinum group metal catalyst as converted to a weight of a platinum group metal per a total mass of the components (A) and (B).

The silicone rubber composition used in the bladder according to the invention has a JIS A hardness of not less than 40, a tear strength of not less than 30 kN/m, a tensile strength of not less than 7 MPa, an elongation at break of not less than 600% and a tensile modulus at 300% elongation of not less than 2.0 MPa after vulcanization.

Also, the bladder according to the invention is used for tire building or tire vulcanization.

According to the invention, it is possible to produce a bladder for tire production suitable in both of tire building and vulcanization without generating problems as in the conventional bladder by taking the above construction.

A preferable embodiment of the invention will be described in detail below.
The bladder for tire production according to the invention uses a silicone rubber composition comprising the following components (A)-(D).

In the silicone rubber composition according to the invention, a straight-chain diorganopolysiloxane used as a base polymer of the component (A) and including two or more alkenyl groups bonded to silicon atoms in its molecule is a well-known organopolysiloxane used as a main material (base polymer) in a normal liquid addition curing type silicone rubber composition.

Such an organopolysiloxane is basically a straight-chain diorganopolysiloxane typically represented by the following mean compositional formula:

(R²)ₐSiO_{(4-a)/2}

wherein R² is a substituted or non-substituted monovalent hydrocarbon group having a carbon number of 1-10, particularly 1-6 and bonded to a silicon atom forming a siloxane structure in its molecule, and a is a number of 1.9-2.4, particularly 1.95-2.05 and including not less than 2, preferably 2-10, more preferably 2-5 alkenyl groups each bonded to silicon atom in its one molecule and having a weight average molecular weight of 300000-1200000, preferably about 500000-1000000 as converted to polystyrene through GPC (gel permeation chromatography).

In the above compositional formula, R² is selected from alkyl groups such as methyl, ethyl, propyl, isopropyl, butyl, tert-butyl, hexyl, cyclohexyl and the like; alkenyl groups such as vinyl, allyl, propenyl, isopropenyl, butenyl and the like; aryl groups such as phenyl, tolyl, xylyl and the like; aralkyl groups such as benzyl, phenylethyl and the like; and halogen-substituted or cyano group-substituted hydrocarbon groups such as chloromethyl, bromoethyl, 3,3,3-trifluoropropyl, cyanoethyl and the like, in which the substituted or non-substituted monovalent hydrocarbons may be same or different. The alkenyl group is preferably vinyl group. The other hydrocarbon groups are preferably methyl group, phenyl group and trifluoropropyl group. Particularly, it is preferable that 95-100 mol% of the substituted or non-substituted monovalent hydrocarbon group other than the alkenyl group is methyl group. The content of the alkenyl group in the total organic group R² (i.e. the above substituted or non-substituted monovalent hydrocarbon groups) is usually 0.0001-20 mol%, preferably 0.001-10 mol%, more preferably 0.01-5 mol%. Moreover, two or more alkenyl groups included in one molecule may be bonded to either silicon atoms in both terminals of the molecular chain or silicon atoms on the way of the molecular chain or both, but it is preferable that the alkenyl groups are at least bonded to silicon atoms in both terminals of the molecular chain in view of properties and the like of silicone-rubber cured product.

The organopolysiloxane is a straight-chain diorganosiloxane in which a main chain is comprised of a repeating diorganosiloxane unit (R₂SiO_{2/2} unit) and a part of the main chain may have a branched structure including some of SiO_{3/2} unit and/or SiO_{4/2}. Typically, it is preferably a straight-chain diorganopolysiloxane in which the main chain is comprised of only a repeating diorganosiloxane unit (R₂SiO_{2/2} unit) and both terminals of the molecular chain are terminated with triorganosiloxy group (R₃SiO_{1/2} unit). For example, there are mentioned a dimethylpolysiloxane terminated at both terminals of molecular chain with dimethylvinylsiloxy group, a dimethylsiloxane terminated at both terminals of molecular chain with dimethylvinylsiloxy group-methylvinylsiloxane copolymer, a dimethylsiloxane terminated at both terminals of molecular chain with dimethylvinylsiloxy group-diphenylsiloxane copolymer, a dimethylsiloxane terminated at both terminals of molecular chain with trimethylsiloxy group-methylvinylsiloxane copolymer and so on.

The alkenyl group-containing organopolysiloxane as the component (A) is a single polymer having the above molecular structures or a mixture of the polymers. The alkenyl group-containing organopolysiloxanes as the component (A) may be used alone or in a combination of two or more. Moreover, when two or more alkenyl group-containing organopolysiloxanes having different weight average molecular weights are used as the component (A), it is preferable that the weight average molecular weight as a whole of the mixture comprising the polymers is within the aforementioned range.

As a preferable example of the component (A) are mentioned the following structural formulae: 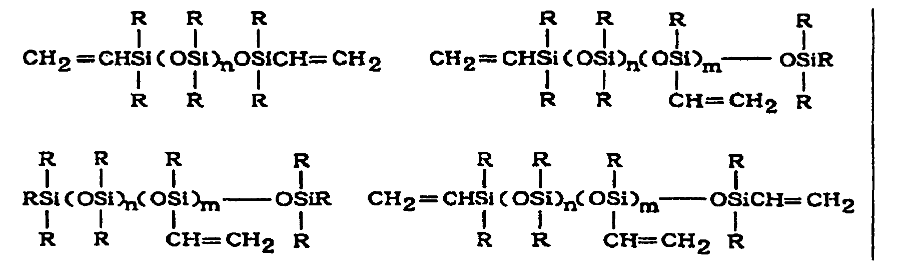 In the above formulae, R is the same substituted or non-substituted monovalent hydrocarbon group as previously mentioned, and each of n and m is a positive integer giving the aforementioned weight average molecular weight for each of the single polymers, or a positive integer giving the aforementioned weight average molecular weight on average for the mixture of the polymers having a polymerization degree distribution.

In the silicone rubber composition according to the invention, the organohydrogenpolysiloxane used as the component (B) serves as a crosslinking agent resulting in a hydrosilylated addition product with the component (A). The organohydrogenpolysiloxane is represented by the following mean compositional formula:

(R¹)ₓH_{y}SiO_{(4-x-y)/2}

wherein R¹ is a substituted or non-substituted monovalent hydrocarbon group other than an aliphatic unsaturated group, and each of x and y is positive number satisfying 1≤x≤2.2, 0.002≤y≤1 and 1.002≤x+y≤3, and has a viscosity at 25°C of 0.5-1000 cP, particularly about 1-500 cP and a number of silicon atoms in one molecule (or polymerization degree) of 2-300, particularly about 3-200. The molecular structure is not particularly limited, and may include a straight-chain structure, a cyclic structure, a branched structure, three-dimensional network (resin-like) structure and so on likewise those usually used in the conventional liquid addition-curing type silicone rubber compositions, but it is necessary that the number of hydrogen atoms bonded to silicon atom (i.e. SiH group) included in one molecule is 2 or more (usually about 2-200), preferably 3 or more (e.g. about 3-100). Furthermore, as a monovalent organic group bonded to silicon atom other than hydrogen atom in the compound (for example, R¹ group in the above mean compositional formula) is mentioned the same as the substituted or non-substituted monovalent hydrocarbon group in the organopolysiloxane as the component (A), but the substituted or non-substituted monovalent hydrocarbon groups other than aliphatic unsaturated group such as alkenyl group or the like, particularly methyl group, phenyl group and 3,3,3-trifluoropropyl group are preferable.

As the organohydrogenpolysiloxane are mentioned 1,1,3,3-tetramethyldisiloxane, 1,3,5,7-tetramethylcyclotetrasiloxane, tris(dimethylhydrogensiloxy) methylsilane, tris(dimethylhydrogensiloxy) phenylsilane, methylhydrogenpolysiloxane sealed at both terminals with trimethylsiloxy group, dimethylsiloxane-methylhydrogensiloxane copolymer sealed at both terminals with trimethylsiloxy group, dimethylpolysiloxane sealed at both terminals with dimethylhydrogensiloxy group, dimethylsiloxane-methylhydrogensiloxane copolymer sealed at both terminals with dimethylhydrogensiloxy group, methylhydrogensiloxane-diphenylsiloxane copolymer sealed at both terminals with trimethylsiloxy group, methylhydrogensiloxane-diphenylsiloxane-dimethylsiloxane copolymer sealed at both terminals with trimethylsiloxy group, a copolymer consisting of (CH₃)₂HSiO_{1/2} unit and SiO_{4/2} unit, a copolymer consisting of (CH₃)₂HSiO_{1/2} unit, SiO_{4/2} unit and (C₆H₅)₁SiO_{1/2} unit, and so on. Particularly, an organohydrogenpolysiloxane sealed at both terminals with triorganosiloxy group such as methylhydrogenpolysiloxane sealed at both terminals with trimethylsiloxy group or the like is preferable.

The addition amount of the component (B) is 0.01-10 parts by mass, preferably 0.1-5.0 parts by mass based on 100 parts by mass of the component (A). When the addition amount is too small, the crosslinking density extremely lowers, which badly affects the heat resistance of the cure silicone rubber, and also the strength becomes low; while when the amount is too large, the surface is not mirror-finished, or a bad influence on the heat resistance may be caused. Moreover, the organohydrogenpolysiloxanes as the component (B) may be used alone or in a combination of two or more.

The dry silica (fumed silica) used as the component (C) in the invention is added for conducting the strength adjustment to ensure the strength, in which the dry silica is used for controlling the hydrolysis of the silicone rubber through heat. As the dry silica can be used ones conventionally well-known as a reinforcing filler for the silicone rubber, but in order to achieve the object of the invention, it is necessary to have a specific surface area through a BET adsorption process of not less than 100 m²/g, preferably 200-600 m²/g. Also, it is more preferable to use a hydrophobic silica covered with an organic group such as alkyl group or the like in which the surface of fine silica powder is rendered into ether bond by subjecting a plurality of silanol groups existing on the surface of the silica to a hydrophobic treatment with an organopolysiloxane, an organopolysilazane, chlorosilane, an alkoxysilane or the like. The hydrophobic treatment may be carried out by mixing the untreated component (C) with the above treating agent under heating before the compounding with one or more another components of the silicone rubber composition, or may be conducted together with the preparation of the silicone rubber composition by mixing the untreated component (C) with the other components and the above treating agent under heating in preparing the composition. The silicas may be used alone or in a combination of two or more. As the hydrophobic silica may be mentioned Aerosil R-812, R-812S, R-972, and R-974 (trade name, made by Degussa), Rheorosil MT-10 (trade name, made by Tokuyama Soda Co., Ltd.), Nipsil SS series (trade name, made by Nippon Silica Co., Ltd.) and so on.

The addition amount of silica as the component (C) is 20-80 parts by mass, preferably 60 parts by mass based on 100 parts by mass of the component (A). When the addition amount is too small, the sufficient strength and hardness are not obtained and also the effect of improving the creep resistance is insufficient, while when it is too large, the viscosity of the rubber composition is too high and it is difficult to conduct the casting.

The platinum group metal catalyst used as the component (D) in the invention is a catalyst for promoting a hydrosilylated addition reaction between the alkenyl group in the component (A) and the SiH group in the component (B). The composition according to the invention is a platinum catalyst crosslinking (addition reaction crosslinking) system for ensuring the heat resistance. As the platinum group metal catalyst may be mentioned platinum black, chloroplatinic acid, an alcohol-modified product of chloroplatinic acid; a platinum compound such as a complex of chloroplatinic acid with an olefin, an aldehyde, a vinylsiloxane, an acetylene alcohol or the like; and a compound containing a platinum group metal such as rhodium, palladium or the like. Particularly, a silane or siloxane-modified product such as a vinylsiloxane complex of chloroplatinic acid or the like is preferable from a viewpoint of the compatibility between the components (A) and (B). In this case, vinylsiloxane as a ligand forming a complex with a platinum group metal is one constitutional element of the platinum group metal catalyst, which does not fall under the category of the component (A). The amount of the platinum group metal catalyst compounded as converted to weight of platinum group metal is 0.1-1000 ppm, preferably 1-200 ppm based on the total weight of the components (A) and (B). When the amount is too small, the crosslinking start temperature becomes too high leading to delay of the end time, while when it is too large, there is a fear of starting the crosslinking before the completion of the casting.

The silicone rubber composition according to the invention may be compounded with a metal powder, if necessary. The metal powder is not particularly limited as long as it can enhance the thermal conductivity in the rubber composition, and a pure metal powder of aluminium, gold, silver, copper or the like can be preferably used. The metal powder is a spherical matter having a particle size of 10-500 µm, preferably 100-200 µm. The case that the metal powder is needle-shaped or plate-shaped is not preferable because anisotropy appears in the properties of the resulting crosslinked product. The addition amount of the metal powder is usually not more than 10 parts by mass (i.e. 0-10 parts by mass), preferably 0.5-10 parts by mass, more preferably 0.5-5 parts by mass based on 100 parts by mass of the component (A). When the addition amount is too small, the thermal conductivity of the rubber composition can not be increased sufficiently and the progress of the crosslinking reaction may differ between the surface and the inside of the composition; while when it is too large, the viscosity of the composition becomes too high and it may be difficult to fill the composition into details during the casting, and also the casting time is prolonged to deteriorate the workability.

Also, the silicone rubber composition according to the invention may be compounded with an inorganic powder, if necessary. The inorganic powder is one other than silica as the component (C) and the above metal powder and serves to adjust the thermal shrinkage of the composition according to the invention. The kind of the inorganic powder is not particularly limited, and can include mineral powder of mica, talc, gypsum, calcite, fluorite, apatite, feldspar or the like; clay such as kaolin or the like; zeorite, glass powder and so on. The addition amount of the inorganic powder is usually not more than 5 parts by mass (i.e. 0-5 parts by mass), preferably 1-5 parts by mass, more preferably 1-2 parts by mass based on 100 parts by mass of the component (A). When the addition amount is too small, the effect of adjusting the composition may be insufficient, while when it is too large, the viscosity of the composition becomes too high and the expected effect may not be developed.

To the composition according to the invention may be properly added various additives usually used in the silicone rubber composition, if necessary. For example, a controlling agent for the adjustment of curing time such as prolonging of working time at room temperature or the like, a silane coupling agent and so on may be added, if necessary.

Preferably, the crosslinking reaction in the rubber composition according to the invention can be carried out at a temperature of 120-200°C, preferably 140-180°C, more preferably 160-170°C for 10-60 minutes, preferably 15-30 minutes.

Also, the preparation of the rubber composition according to the invention may be conducted by mixing the components (A)-(D) and, if necessary, one or more arbitrary components in an optional mixing order with a well-known mixing means such as a planetary mixer, a Sinagawa mixer or the like.

The silicone rubber composition according to the invention shows the following properties after vulcanization. That is, a JIS A hardness is not less than 40, preferably 50-60, and a tear strength is not less than 30 kN/m, preferably 40-55 kN/m, and a tensile strength is not less than 7 MPa, preferably 9-12 MPa, and an elongation at break is not less than 600%, preferably 600-900%, and further a tensile modulus at 300% elongation is not less than 2.0 MPa, preferably 3.0-5.0 MPa. Since the composition according to the invention has high tensile modulus in addition to the high hardness and excellent tear strength, tensile strength, elongation at break and the like, the bladder for tire production made from this composition is excellent in both the durability and the bending performance.

As regards heat resistance, the bladder according to the invention has a heat resistant temperature of not lower than 230°C and indicates performances causing no deterioration damage even at a heat resistance temperature of 230°C and 200% shear strain (Moreover, it has been confirmed that the conventional bladder has a heat resistant temperature of about 220°C and is deteriorated and damaged at 100% shear strain). That is, the bladder has a high-temperature mechanical durability higher by two or more times than the conventional one.

Especially, the bladder for tire building according to the invention uses the aforementioned silicon rubber composition and does not need the conventional silicone coating, so that the service life can be largely improved at a high strength as compared with the conventional one and also the tear strength becomes higher than the conventional one.

Also, the bladder for tire vulcanization according to the invention uses the aforementioned silicone rubber composition, so that the friction coefficient is small and the releasability is highly improved, and hence the adhesion between the bladder and the green tire can be prevented without applying a releasing agent. As a result, the conventional step for the application of the releasing agent can be omitted and bad influence on the tire quality can be prevented, and further it is possible to improve the service life to 500 times or more for a passenger car tire.

Particularly, for the new tire production method, it is essential to apply a silicone-based releasing agent onto a surface of a bladder in order to release a cured tire from the bladder in the conventional tire vulcanization. In this case, the bladder is pre-heated in a vulcanization mold at a closed state prior to the vulcanization of the tire, during which the silicone-based releasing agent is transferred to an inner face of the mold. At the subsequent tire vulcanization step, the silicone component transferred to the mold contacts with and penetrates into a tread formed by winding a rubber ribbon in the new tire production method, thereby causing a problem such as silicone biting through the tread (cracking). On the contrary, it is possible to solve such a problem with the bladder for tire vulcanization according to the invention.

The following example is given in the illustration of the invention and is not intended as limitation thereof.

A bladder for tire vulcanization and a bladder for tire building are prepared by using the conventionally used rubber composition (conventional example) and the silicone rubber composition according to the invention (example), respectively. The vulcanization of a tire having a tire size of PSR215/60R15.5 is carried out by using the resulting bladder for tire vulcanization for a vulcanization time of 15 minutes (a preloading time under a steam pressure of 13 kg/cm² is 5 minutes and subsequently an internal pressure of 21 kg/cm² is held for 10 minutes) until the bladder is punctured to thereby evaluate the service life (vulcanization number). Also, the number capable of building a tire for a common passenger car is evaluated by using the bladder for tire building. These results are shown in Table 1 together.

**Table 1**

| | | Conventional Example | Example |
|---|---|---|---|
| Service life (times) of bladder for tire vulcanization | no application of releasing agent onto inner face of tire | not more than 100 times | 400-500 times |
| | intermittent application of releasing agent onto inner face of tire (1 tire applied/3 tires) | 300-400 times | - |
| | application of releasing agent to inner face of all tires | 600-700 times | - |
| Number capable of building tire with bladder for tire building (tires) | | 1000-1500 tires | not less than 3000 tires |

As shown in Table 1, all of the bladders obtained by using the silicone rubber composition according to the invention have excellent durability as compared with the conventional bladder. Particularly, it has been confirmed that even in the case of using the bladder for tire vulcanization without the application of the releasing agent, there is obtained a durability equal to that of the conventional bladder applied with the releasing agent.

## Claims

1. A bladder for tire production comprising a silicone rubber composition comprising (A) 100 parts by mass of a straight-chain diorganopolysiloxane including two or more alkenyl groups bonded to silicon atoms in its molecule and having a weight average molecular weight of 300000-1200000; (B) 0.01-10 parts by mass of an organohydrogenpolysiloxane represented by the following mean compositional formula:
(R¹)ₓH_{y}SiO_{(4-x-y)/2}
wherein R¹ is a substituted or non-substituted monovalent hydrocarbon group other than an aliphatic unsaturated group, and each of x and y is positive number satisfying 1≤x≤2.2, 0.002≤y≤1 and 1.002≤x+y≤3 and including two or more hydrogen atoms bonded to silicon atoms in its molecule; (C) 20-80 parts by mass of a dry silica having a specific surface area of not less than 100 m²/g; and (D) 0.1-1000 ppm of a platinum group metal catalyst as converted to a weight of a platinum group metal per a total mass of the components (A) and (B),
wherein the composition after vulcanization has a JIS A hardness of not less than 40, a tear strength of not less than 30 kN/m, a tensile strength of not less than 7 MPa, an elongation at break of not less than 600% and a tensile modulus at 300% elongation of not less than 2.0 MPa.

2. The use of a bladder for tire production according to claim 1, for tire building or tire vulcanization.

## Patentansprüche

1. Heizbalg zur Reifenherstellung, umfassend eine Silikongummi-Zusammensetzung, die aus Folgendem besteht: (A) 100 Masseteilen eines geradkettigen Diorganopolysiloxans, das zwei oder mehr Alkenylgruppen einschließt, die an Siliziumatome in seinem Molekül gebunden sind, und ein Gewichtsmittel des Molekulargewichts von 300000-1200000 aufweist; (B) 0,01 bis 10 Masseteilen eines Organohydrogenpolysiloxans, das durch die folgende mittlere Zusammensetzungsformel dargestellt ist:
(R¹)ₓH_{y}SiO_{(4-x-y)/2}
worin R¹ eine substituierte oder nicht substituierte monovalente Kohlenwasserstoffgruppe mit Ausnahme einer aliphatischen ungesättigten Gruppe ist, und x und y jeweils eine positive Zahl ist, die 1≤x≤2,2, 0,002≤y≤1 und 1,002≤x+y≤3 zufriedenstellt, und zwei oder mehr Wasserstoffatome einschließt, die an Siliziumatome in seinem Molekül gebunden sind; (C) 20 bis 80 Masseteilen eines trockenen Siliziumdioxids mit einem spezifischen Oberflächenbereich von nicht weniger als 100 m²/g; und (D) 0,1 bis 1000 ppm eines Metallkatalysators der Platingruppe wie in ein Gewicht eines Metalls der Platingruppe bezogen auf die Gesamtmasse der Komponenten (A) und (B) umgewandelt,
worin die Zusammensetzung nach der Vulkanisation eine JIS A-Härte von nicht weniger als 40, eine Reißfestigkeit von nicht weniger als 30 kN/m, eine Zugfestigkeit von nicht weniger als 7 MPa, eine Dehnung beim Reißen von nicht weniger als 600 % und einen Zugmodul bei einer Dehnung von 300 % von nicht weniger als 2,0 MPa aufweist.

2. Verwendung eines Heizbalgs zur Reifenherstellung nach Anspruch 1, zum Reifenaufbau oder zur Reifenvulkanisation.

## Revendications

1. Vessie pour la production de pneus comprenant une composition de caoutchouc de silicone comprenant (A) 100 parties en masse d'un diorganopolysiloxane à chaîne droite incluant deux groupes alcényles ou plus liés à des atomes de silicium dans sa molécule et possédant un poids moléculaire moyen en poids de 300.000-1.200.000; (B) 0,01-10 parties en masse d'un organohydrogénopolysiloxane représenté par la formule de composition moyenne suivante:
(R¹)ₓH_{y}SiO_{(4-x-y)/2}
dans laquelle R¹ est un groupe hydrocarbure monovalent substitué ou non substitué autre qu'un groupe insaturé aliphatique, et chacun de x et de y est un nombre positif satisfaisant 1 ≤ x ≤ 2,2, 0,002 ≤ y ≤ 1 et 1,002 ≤ x+y ≤ 3 et incluant deux atomes d'hydrogène ou plus liés à des atomes de silicium dans sa molécule; (C) 20-80 parties en masse d'une silice sèche possédant une surface spécifique de pas plus de 100 m²/g; et (D) 0,1-1000 ppm d'un catalyseur d'un métal du groupe du platine tel que converti à un poids d'un métal du groupe du platine pour une masse totale des composants (A) et (B),
dans laquelle la composition après vulcanisation possède une dureté A JIS de pas moins de 40, une résistance au déchirement de pas moins de 30 kN/m, une résistance à la traction de pas moins de 7 MPa, un allongement à la rupture de pas moins de 600% et un module de traction à un allongement de 300% de pas moins de 2,0 MPa.

2. Utilisation d'une vessie pour la production de pneus selon la revendication 1, pour la confection de pneus ou la vulcanisation de pneus.
